# EUROPÄISCHE PATENTSCHRIFT

(11) **EP 1 380 038 B1**
(45) Veröffentlichungstag und Bekanntmachung des Hinweises auf die Patenterteilung: **24.08.2005**
(21) Anmeldenummer: 02724118.1
(22) Anmeldetag: 21.03.2002
(51) Int. Cl.: H01F 7/02, G01D 5/165, G01D 5/251

(54) **PASSIVER MAGNETISCHER POSITIONSSENSOR**
PASSIVE MAGNETIC POSITION SENSOR
DETECTEUR DE POSITION MAGNETIQUE PASSIF

(30) Priorität: 19.04.2001 DE 10119317
(43) Veröffentlichungstag der Anmeldung: 14.01.2004
(73) Patentinhaber: SIEMENS AKTIENGESELLSCHAFT, 80333 München (DE)
(72) Erfinder: PENZAR, Zlatko, 60529 Frankfurt (DE); ECK, Karl, 60318 Frankfurt (DE)
(86) Internationale Anmeldenummer: PCT/DE2002/001034
(87) Internationale Veröffentlichungsnummer: WO 2002/086917

(56) Entgegenhaltungen:
- CH-A- 682 859
- DE-A- 19 648 539
- DE-A- 19 803 018
- US-A- 5 315 245

## Beschreibung

Die Erfindung betrifft einen passiven magnetischen Positionssensor, bestehend aus einem Substrat mit einem auf diesem Substrat angeordneten Widerstandsnetzwerk, welchem eine Kontaktfederstruktur zugeordnet ist, die unter Einwirkung eines Permanentmagneten auslenkbar ist, wobei eine elektrische Verbindung zwischen Widerstandsnetzwerk und Kontaktfederstruktur durch Berührung bewirkt wird, welche von der Position des Permanentmagneten abhängig ist, wobei die Kontaktfederstruktur und die Widerstandsstruktur in einem dichten Gehäuse eingeschlossen sind und der Permanentmagnet außerhalb des dichten Gehäuses bewegbar ist.

Ein solcher Positionssensor ist aus der DE 196 48 539 bekannt. Das Widerstandsnetzwerk und die Kontaktstruktur sind dabei auf einem Substrat angeordnet. Durch eine Magneteinrichtung, die mit einem beweglichen Objekt verbunden ist, dessen Position ermittelt werden soll, wird die Kontaktfederstruktur derart ausgelenkt, dass sie das Widerstandsnetzwerk berührt und ein der Position des bewegten Objektes entsprechendes Ausgangssignal am Positionssensor abnehmbar ist.

Ein derartig beschriebener magnetischer Positionssensor ist nur wenige Zentimeter lang. Um eine zuverlässige Wirkung des Positionssensors zu ermöglichen, kann daher ein Magnet nicht unendliche vergrößert werden, da dies zur Folge hätte, dass viele Federbeine der Kontaktfederstruktur gleichzeitig durch den Magneten angezogen würden, so dass das Ausgangssignal des Sensors keine eindeutigen Signale mehr liefert und somit nicht mehr verwertbar wäre.

Der Erfindung liegt somit die Aufgabe zugrunde, eine passiven magnetischen Positionssensor mit verbesserter Magnetkraft des Permanentmagneten anzugeben.

Erfindungsgemäß wird die Aufgabe dadurch gelöst, dass der Permanentmagnet in Bewegungsrichtung der Kontaktfederstruktur polarisiert ist, wobei eine Flussleiteinrichtung zur Bündelung der Anziehungskraft des ungestörten Magnetfeldes nahe dem Permanentmagneten angeordnet ist.

Die Erfindung hat den Vorteil, dass aufgrund des Flussleitkörpers der Verlauf des ungestörten Magnetfeldes so geändert wird, dass sein Gradient in Richtung quer zum Gehäuse vergrößert wird. Als ungestörtes Magnetfeld wird das von dem Permanentmagneten ausgebildete Magnetfeld betrachtet, in welchem kein Gehäuse mit Widerstandsnetzwerk und Kontaktfederstruktur eingebracht wird. Aufgrund dieser Maßnahme kann die Kraft des Magnetfeldes verstärkt werden, ohne die geometrischen Abmaße verändern zu müssen.

Eine einfache Weiterbildung der Erfindung besteht darin, dass die Flussleiteinrichtung als magnetisch permeable Kappe ausgebildet ist, welche auf den Permanentmagneten aufsetzbar ist. Eine solche Kappe hat einen u-förmigen Querschnitt, an dessen freien Enden sich virtuelle Magnetpole bilden. Somit wird das ungestörte Magnetfeld (Feld in der Luft) so gebündelt, dass ein beträchtlicher Zuwachs des Feldgradienten quer zur Richtung des Sensorgehäuses an der Position des Gehäuses erreicht werden kann.

In einer anderen Ausgestaltung besteht die Flussleiteinrichtung aus zwei zusätzlichen Hilfsmagneten, wobei der Permanentmagnet zwischen den beiden Hilfsmagneten angeordnet ist und die Magnetisierungsrichtung der Hilfsmagneten der Magnetisierungsrichtung des Permanentmagneten entgegengesetzt ist.

Die Magnetkraft des Permanentmagneten kann dabei besonders voll ausgenutzt werden, wenn das Gehäuse unmagnetisch ausgebildet ist und somit die Kräfte ungedämpft an der Kontaktfederstruktur wirken.

Die Erfindung lässt zahlreiche Ausführungsformen zu. Eine davon soll anhand der in der Zeichnung dargestellten Figuren näher erläutert werden. Es zeigt:
- Fig. 1:: Ausführungsbeispiel des Positionssensors als Potentiometer,
- Fig. 2:: Widerstandsbahn mit Leiterbahn in Draufsicht,
- Fig. 3:: Widerstandsbahn mit Leiterbahn im Schnitt,
- Fig. 4:: Ausgangssignal des Positionssensors,
- Fig. 5:: erstes Ausführungsbeispiel des Magneten mit Flussleiteinrichtung,
- Fig. 6:: zweite Ausführungsform des Magneten mit Flussleiteinrichtung.

Gleiche Merkmale sind in allen Figuren mit gleichem Bezugszeichen gekennzeichnet.

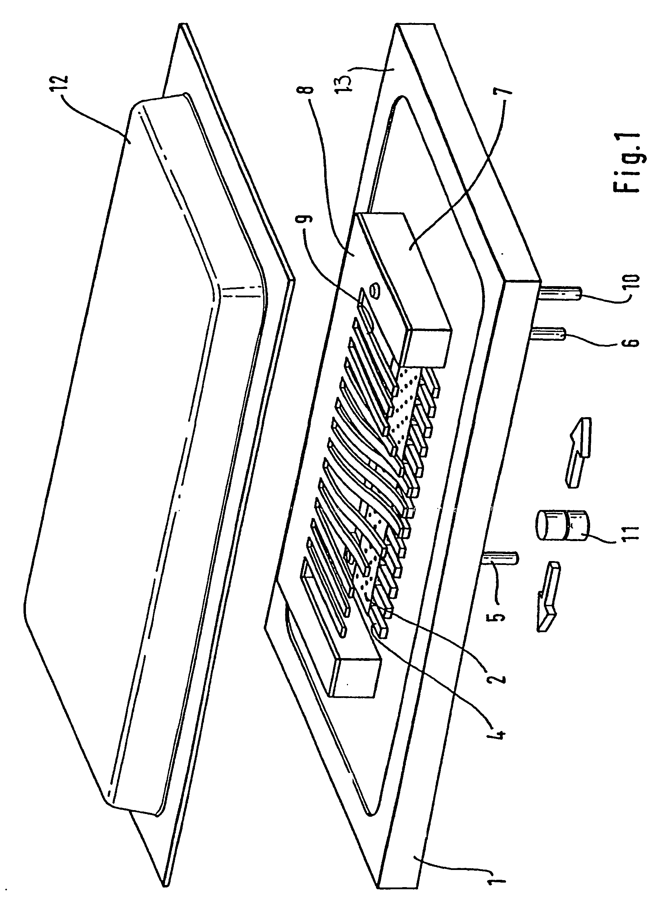

In Fig. 1 ist schematisch der Aufbau eines linearen passiven magnetischen Positionssensors auf der Basis einer Dickschichtanordnung in Form eines Potentiometers dargestellt. Das unmagnetische Substrat 1 trägt ein Widerstandsnetzwerk in Form einer schichtförmigen Widerstandsbahn 2, welche sich zwischen den elektrischen Anschlüssen 5 und 6 erstreckt.

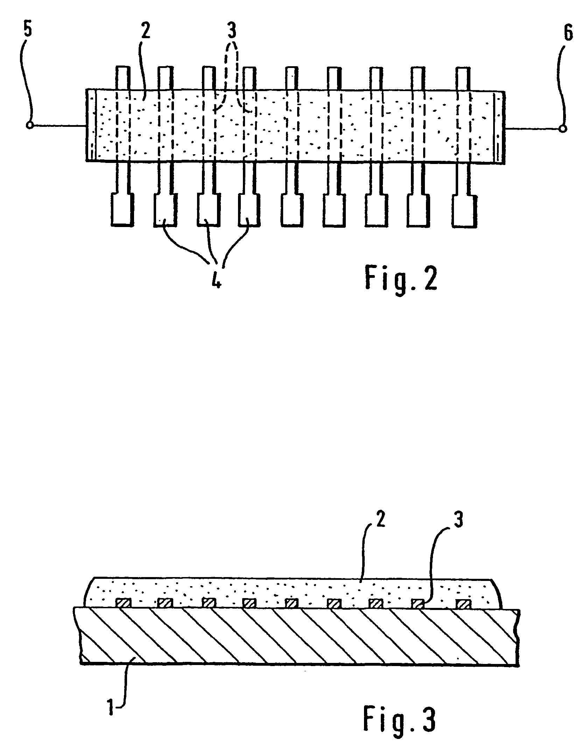

Wie aus Fig. 2 ersichtlich, sind unter der Widerstandsbahn 2 in gleichmäßigen Abständen auf dem Substrat parallel zueinander mehrere Leiterbahnen 3 angeordnet. Diese Leiterbahnen 3 sind senkrecht zur Widerstandsbahn 2 direkt auf dem Substrat 1 aufgebracht. Die Leiterbahnen 3 werden teilweise von der Widerstandsbahn 2 abgedeckt.. Dabei bildet das Ende jeder Leiterbahn 3 eine Kontaktfläche 4, die mit Gold oder Silber beschichtet ist.

Die Schnittdarstellung in Fig. 3 zeigt, dass die Leiterbahnen 3 im Bereich der Widerstandsbahn 2 vollständig von dieser umschlossen sind, um eine zuverlässige elektrische Kontaktierung zu gewährleisten. Gemäß Fig. 1 ist auf-dem Substrat parallel zur Widerstandsbahn 2 ein Abstandshalter 7 angeordnet, auf welchem eine einstückige, kammförmige Biegebalkenstruktur 8 in Form einer weichmagnetischen Folie aufgebracht ist. Alternativ dazu besteht die Biegebalkenstruktur aus nichtmagnetischem Material, welches mit einer magnetischen Schicht versehen ist. Die kammförmige weichmagnetische Biegebalkenstruktur 8 besteht aus einseitig gestützten, freibeweglichen Biegebalken 9. Die Biegebalken 9 sind zur Reduzierung des Kontaktwiderstandes galvanisch mit einer Gold- oder Silberschicht beschichtet.

Der Abstandshalter 7 hält die freibeweglichen Enden der Biegebalkenstruktur 8 in einem definierten Abstand zu den Kontaktflächen 4. Die freibeweglichen Enden der Biegebalken 9 sind überdeckend zu den Kontaktflächen 4 angeordnet. Dabei ist die als weichmagnetische Folie ausgebildete Biegebalkenstruktur 8 selbst elektrisch leitfähig und steht mit dem außenliegenden elektrischen Anschluss 10 in Verbindung.

Die Widerstandsbahn 2 ist, wie bereits erläutert, über die Anschlüsse 5 und 6 elektrisch mit Masse und der Betriebsspannung U_{B} verbunden. Die Signalspannung U_{AUS} des Positionsgeber ist über den elektrischen Anschluss 10 abgreifbar, der mit der Biegebalkenstruktur 8 verbunden ist. Die Signalspannung U_{AUS} ist im Bereich von 0 Volt bis U_{B} variierbar und stellt die Position eines Permanentmagneten 11 dar.

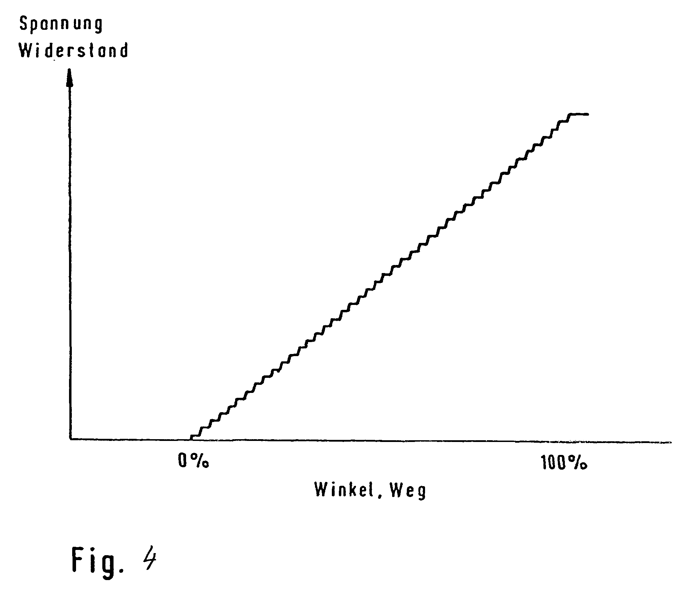

Der Permanentmagnet 11, welcher außerhalb des Gehäuses 1, 12 beweglich gegenüber der abgewandten Seite des die Widerstandsbahn 2 tragenden Substrats 1 angeordnet ist, wird im Bereich der Überlagerung der Kontaktflächen 4 mit den frei beweglichen Enden der einseitig gestützten Biegebalken 9 bewegt. Die frei beweglichen Enden der Biegebalken 9 der Biegebalkenstruktur 8 werden durch das Magnetfeld des Permanentmagneten 11 auf die Kontaktflächen 4 gezogen und kontaktiert. Entsprechend der Position des Permanentmagneten 11 wird eine elektrische Verbindung zu den zugehörigen Widerständen des Widerstandsnetzwerkes erzeugt und eine dieser Position entsprechende Signalspannung U_{AUS} abgegriffen. Es wird dabei ein gestuftes Ausgangssignal erzeugt, wie es in Fig. 4 dargestellt ist.

Die Breite des Dauermagneten 11 ist so dimensioniert, dass mehrere nebeneinander liegende frei bewegliche Enden 9 der Biegebalkenstruktur 8 gleichzeitig mit den entsprechenden Kontaktflächen kontaktiert werden und somit redundant wirken, so dass etwaige Kontaktunterbrechungen nicht zum völligen Signalausfall des Meßsystems führen.

Das die Widerstandsbahn 2 und die weichmagnetische Folie 8 tragende isolierende Substrat 1 besteht aus einer Keramikplatte. Sie dient gleichzeitig als Gehäusewandung des Positionssensors, die mit einer Gehäuseabdeckung 12 verschlossen wird. Das Material der Gehäuseabeckung 12 und das Substrat 1 weisen dabei den gleichen, bzw. einen ähnlichen Temperaturausdehnungskoeffizienten auf und können verlötet, verschweißt oder verklebt werden.

Vorteilhafterweise wird eine unmagnetische Gehäuseabdeckung 12 verwendet. Eine metallisierte Schicht 17 als umlaufender Rand auf dem isolierenden Substrat 1 dient zur Verkapselung des Positionssensors. Zur Verbesserung der Lötbarkeit wird die Metallschicht 17 verzinnt. Zur Realisierung der elektrischen Anschlüsse 5, 6, 10 werden Stifte durch das isolierende Substrat 1 geführt und dort hermetisch dicht und damit korrosionsbeständig mit der Widerstandsbahn 2 bzw. der Biegebalkenstruktur 8 verlötet oder verschweißt.

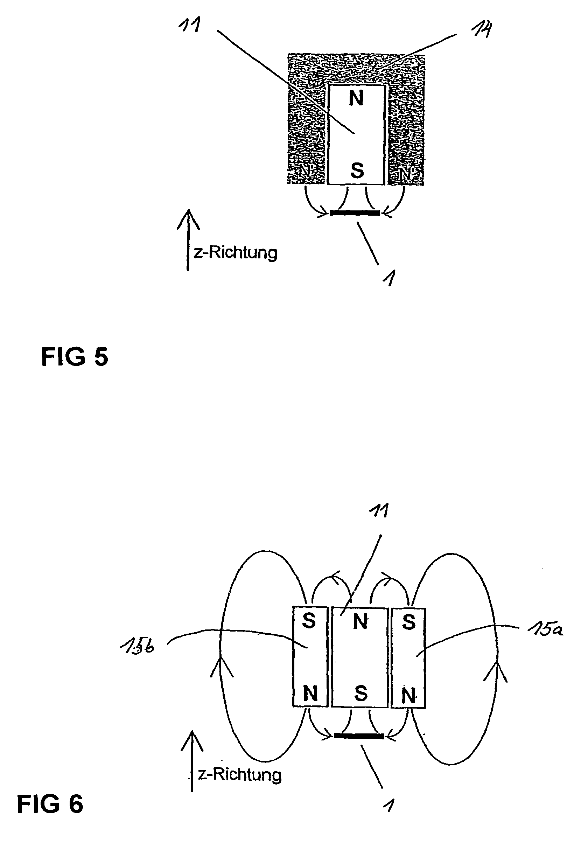

Um die Anziehungskraft des Magneten 11 im Bereich des Sensors zu erhöhen, wird der Gradient des ungestörten Magnetfeldes (das Feld ohne die Präsenz des Sensors, welcher in Fig. 5 und 6 lediglich durch die Gehäuseabdeckung 12 angedeutet ist) in Richtung quer zur Gehäuseabdeckung an deren Position verstärkt werden. Dies kann auf unterschiedliche Arten erzielt werden.

Fig. 5 zeigt eine Anordnung, die das ungestörte Magnetfeld zum Zwecke der Anziehungskrafterhöhung günstiger bündelt. Es wird eine magnetisch permeable Stahlkappe 14 mit einem u-förmigen Querschnitt auf den ursprünglichen Permanentmagneten 11 aufgesetzt. Der Permanentmagnet 11 ist dabei so polarisiert, dass sein Südpol direkt dem Substrat 1 gegenüberliegt. Die Magnetisierungsrichtung des Magneten 11 entspricht dabei der Bewegungsrichtung der Biegebalken 9 der Biegebalkenstruktur 8. An den freien Enden des u-förmigen Querschnitts der Stahlkappe 14 bilden sich virtuelle Magnetpole. Somit wird das ungestörte Feld (Feld in der Luft) ohne Substrat 1 so gebündelt, dass ein beträchtlicher Zuwachs des Feldgradienten an der Position des Substrats 1 erreicht wird.

Denselben Effekt kann man hervorrufen, indem man den Basispermanentmagneten 11 seitlich mit zwei Permanentmagneten 15a, 15b umgibt, welche mit einer Magnetisierung in gegengesinnter Richtung zum Permanentmagneten 11 versehen sind.

## Patentansprüche

1. Passiver Positionssensor, bestehend aus einem Substrat mit einem auf diesem Substrat angeordneten Widerstandsnetzwerk, welchem eine Kontaktfederstruktur zugeordnet ist, die unter Einwirkung eines Permanentmagneten auslenkbar ist, wobei eine elektrische Verbindung zwischen Widerstandsnetzwerk und Kontaktfederstruktur durch Berührung bewirkt wird, welche von der Position des Permanentmagneten abhängig ist, wobei die Kontaktfederstruktur und die Widerstandsstruktur in einem dichten Gehäuse eingeschlossen sind und der Permanentmagneten außerhalb des dichten Gehäuses bewegbar ist, **dadurch gekennzeichnet, dass** der Permanentmagnet (11) in Bewegungsrichtung der Kontaktfederstruktur (8) polarisiert ist, wobei eine Flussleiteinrichtung (14; 15a, 15b) zur Erhöhung der Bündelung der Anziehungskraft des ungestörten Magnetfeldes nahe dem Permanentmagneten (11) angeordnet ist.

2. Passiver Positionssensor nach Anspruch 1, **dadurch gekennzeichnet, dass** die Flussleiteinrichtung (14; 15a, 15b) als magnetisch permeable Kappe (14) ausgebildet ist, welche auf den Permanentmagneten (11) aufsetzbar ist.

3. Passiver Positionssensor nach Anspruch 1, **dadurch gekennzeichnet, dass** die Flussleiteinrichtung (14; 15a, 15b) aus zwei zusätzlichen Hilfsmagneten (15a, 15b) besteht, wobei der Permanentmagnet (11) zwischen den beiden Hilfsmagneten (15a, 15b) angeordnet ist und die Magnetisierungsrichtung der Hilfsmagneten (15a, 15b) der Magnetisierungsrichtung des Permanentmagneten (11) entgegengesetzt ist.

4. Passiver Positionssensor nach Anspruch 1, **dadurch gekennzeichnet, dass** das Gehäuse (1, 12) unmagnetisch ausgebildet ist.

## Claims

1. Passive position sensor, comprising a substrate having a resistance network which is arranged on this substrate and which is assigned a contact spring structure which can be deflected under the action of a permanent magnet, an electrical connection between resistance network and contact spring structure being effected by contact, which depends on the position of the permanent magnet, the contact spring structure and the resistance structure being enclosed in a leaktight housing and the permanent magnet being able to move outside the leaktight housing, **characterized in that** the permanent magnet (11) is polarized in the direction of movement of the contact spring structure (8), a flux guide device (14; 15a, 15b) for increasing the focusing of the attraction force of the undisrupted magnetic field being arranged close to the permanent magnet (11).

2. Passive position sensor according to Claim 1, **characterized in that** the flux guide device (14; 15a, 15b) is formed as a magnetically permeable cap (14) which can be placed on the permanent magnet (11).

3. Passive position sensor according to Claim 1, **characterized in that** the flux guide device (14; 15a, 15b) comprises two additional auxiliary magnets (15a, 15b), the permanent magnet (11) being arranged between the two auxiliary magnets (15a, 15b) and the direction of magnetization of the auxiliary magnets (15a, 15b) being opposed to the direction of magnetization of the permanent magnet (11).

4. Passive position sensor according to Claim 1, **characterized in that** the housing (1, 12) is designed to be non-magnetic.

## Revendications

1. Détecteur passif de position, composé d'un substrat avec un réseau de résistances disposé sur ce substrat, auquel correspond une structure à ressorts de contact, laquelle peut être déviée sous l'influence d'un aimant permanent, provoquant, par leur mise en contact, entre le réseau de résistances et la structure à ressorts de contact, une liaison électrique qui dépend de la position de l'aimant permanent, où la structure à ressorts de contact et la structure de résistances sont enfermées dans un boîtier étanche et où l'aimant permanent est mobile à l'extérieur du boîtier étanche, **caractérisé par le fait que** l'aimant permanent (11) est polarisé dans le sens du mouvement de la structure à ressorts de contact (8), un dispositif de guidage du flux (14; 15a, 15b) destiné à augmenter la concentration de la force d'attraction du champ magnétique non perturbé étant disposé près de l'aimant permanent (11).

2. Détecteur passif de position selon la revendication 1 **caractérisé par le fait que** le dispositif de guidage du flux (14; 15a, 15b) est conçu comme capot (14) magnétiquement perméable pouvant être coiffé sur l'aimant permanent (11).

3. Détecteur passif de position selon la revendication 1 **caractérisé par le fait que** le dispositif de guidage du flux (14; 15a, 15b) se compose de deux aimants auxiliaires supplémentaires (15a, 15b), l'aimant permanent (11) étant disposé entre les deux aimants auxiliaires (15a, 15b) et la direction de magnétisation des aimants auxiliaires (15a, 15b) étant opposée à la direction de magnétisation de l'aimant permanent (11).

4. Détecteur passif de position selon la revendication 1 **caractérisé par le fait que** le boîtier (1, 12) n'est pas magnétique.
